(19) Europäisches Patentamt

European Patent Office

Office européen des brevets

(11) **EP 2 666 092 B1**

(12) **FASCICULE DE BREVET EUROPEEN**

(45) Date de publication et mention de la délivrance du brevet:
**25.02.2015 Bulletin 2015/09**

(21) Numéro de dépôt: **11804704.2**

(22) Date de dépôt: **23.12.2011**

(51) Int Cl.:
***G06F 12/08*** *(2006.01)*

(86) Numéro de dépôt international:
**PCT/EP2011/074038**

(87) Numéro de publication internationale:
**WO 2012/097944 (26.07.2012 Gazette 2012/30)**

(54) **SYSTEME MULTI-COEURS ET PROCEDE DE COHERENCE DE DONNEES**

MEHRKERNSYSTEM UND DATEN-KOHÄRENZ VERFAHREN

MULTI-CORE SYSTEM AND DATA COHERENCY METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.01.2011  FR 1150500**

(43) Date de publication de la demande:
**27.11.2013  Bulletin 2013/48**

(73) Titulaire: **Commissariat à l'Énergie Atomique et aux Énergies Alternatives 75015 Paris (FR)**

(72) Inventeurs:
• **CUDENNEC, Loïc**
  **F-92320 Chatillon (FR)**
• **KOFUJI, Jussara**
  **F-91300 Massy-Palaiseau (FR)**
• **ACQUAVIVA, Jean-Thomas**
  **F-75006 Paris (FR)**
• **CAMIER, Jean-Sylvain**
  **F-78120 Rambouillet (FR)**

(74) Mandataire: **Delaval, Guillaume Laurent Marks & Clerk France Immeuble Visium 22, avenue Aristide Briand 94117 Arcueil Cedex (FR)**

(56) Documents cités:
**US-A- 5 829 017     US-B1- 7 325 102
US-B1- 7 363 435**

EP 2 666 092 B1

**Description**

L'invention concerne un système multi-coeurs et un procédé de cohérence de données mémorisées dans un tel système.

Elle s'applique notamment au domaine des systèmes multi-coeurs et plus particulièrement du maintien de la cohérence de mémoire cache dans ces architectures.

Un système multi-coeurs est un système électronique comprenant une pluralité d'unités de calcul appelées coeurs. Les processeurs multi-coeurs en sont un exemple. Un tel processeur inclut ainsi plusieurs coeurs dans une même puce électronique et peut comprendre quelques dizaines à quelques centaines de coeurs.

Un système multi-coeurs permet d'effectuer plusieurs traitements en parallèle. Il est alors possible d'atteindre des puissances de calcul supérieures à celle d'un système mono-coeur tout en limitant le phénomène de dissipation thermique. Cependant, de tels systèmes doivent comprendre des moyens pour gérer intelligemment les ressources partagées par ces coeurs, comme par exemple des moyens pour gérer les accès à la mémoire cache de chaque coeur ainsi qu'à la mémoire externe aux coeurs, la mémoire externe étant aussi appelée mémoire centrale ou mémoire principale. Pour rappel, la mémoire cache est un type de mémoire placé habituellement à proximité de la ressource matérielle l'utilisant et dont l'objectif est de mémoriser des copies de données de manière à permettre un accès rapide à cette donnée par ladite ressource. Pour gérer la mémoire cache, des procédés permettant de maintenir de la cohérence des données mémorisées dans cette mémoire sont habituellement utilisés.

Un procédé de maintien de la cohérence de mémoire cache permet notamment la gestion de copies multiples d'une même donnée numérique, lesdites copies étant situées sur les mémoires caches associées à différents coeurs. Le maintien de la cohérence des copies de données permet notamment de simplifier la programmation des systèmes multi-coeurs.

Lorsqu'un défaut de cache est détecté, c'est-à-dire qu'une donnée recherchée par un coeur n'est pas disponible en mémoire cache, ledit coeur de calcul doit rechercher la donnée à l'extérieur, c'est-à-dire soit dans la mémoire cache d'un autre coeur, soit dans la mémoire principale. Pour cela, un coeur utilise habituellement une interface mémoire mettant en oeuvre un protocole d'interface mémoire afin accéder aux données mémorisées à l'extérieur dudit coeur. Il résulte de l'exécution du protocole d'interface mémoire l'envoi de messages transitant par exemple sur un bus de communication et permettant aux coeurs de communiquer les uns avec les autres ainsi qu'avec la mémoire principale. Ces différentes opérations induisent pour un coeur la consommation de ressources de calcul pour exécuter des opérations associées au protocole d'interface mémoire. De plus, l'ensemble des messages envoyés peut occuper une partie significative de la bande passante du bus de communication et cela peut être préjudiciable pour un fonctionnement efficace du système multi-coeurs. En effet, si le bus de communication est engorgé, l'application fonctionnant sur le système multi-coeurs est ralentie. Un procédé de maintien de la cohérence de mémoire a notamment pour but de réduire le temps d'exécution lié au protocole d'interface mémoire ainsi que de limiter autant que possible le nombre de messages envoyés.

Le document US 7 325 102 B1 divulgue un contrôleur de mémoire cache utilisant un "snoop filter" pour réduire le nombre d'opérations de snoop accédant à la mémoire cache. Ce contrôleur inclut un stockage comprenant une pluralité d'entrées configurées pour contenir une "snoop filter indication", qui peut être un simple bit indicatif de la présence de la donnée dans la mémoire cache. Si la "snoop filter indication" indique que la donnée n'est pas en cache, le contrôleur de cache ignore la requête de snoop, au lieu de générer une opération de snoop sur la cache. Comme la cache n'est pas accédée, le traitement de la requête de snoop par le coeur est accéléré. Le contrôleur reçoit une requête de snoop incluant une adresse, réalise une fonction hash sur cette adresse, qui résulte en un index sur le stockage, et décide ou non d'accéder à la mémoire cache en fonction de la "snoop filter indication".

Le document US7363435 B1 décrit un système multiprocesseur équipé d'un mécanisme de prédiction d'opérations de cohérence utilisant une "pattern table" permettant d'identifier au départ d'une adresse en défaut une séquence prévisionnelle de blocs de données à accéder spéculativement, ce qui détermine une ou plusieurs opérations de cohérence.

Un but de l'invention est notamment de pallier les inconvénients précités.

A cet effet l'invention a pour objet un système multi-coeurs comportant une pluralité de coeurs et d'un bus de communication permettant aux coeurs de communiquer entre eux, un coeur étant composé d'un processeur et d'au moins une zone de mémoire cache. Un coeur comporte une table de motifs dans laquelle sont mémorisés un ensemble de motifs, un motif correspondant à une suite d'adresses mémoires associées à une donnée numérique composée de mots binaires mémorisés à ces adresses. Ce coeur comporte en outre des moyens pour faire correspondre l'une des adresses mémoires AdB d'une donnée numérique à un motif lui étant associé lorsque ledit coeur a besoin d'accéder à cette donnée ainsi que des moyens pour transmettre un message unique d'accès à une donnée numérique localisée dans la mémoire cache d'au moins un autre coeur du système, ledit message incluant les adresses mémoires composant le motif de la donnée recherchée.

Selon un aspect de l'invention, l'ensemble des coeurs du système comporte une table de motifs. La table de motifs d'un coeur est contrôlée par le processeur dudit coeur en collaboration avec un accélérateur matériel, ledit accélérateur ayant pour fonctions le stockage de la table de motifs ainsi que la mise en correspondance entre une adresse mémoire d'entrée AdB et l'un des motifs mémorisés.

Selon un autre aspect de l'invention, la suite d'adresses composant un motif est obtenue par une fonction de motif appliquée à l'adresse mémoire d'entrée AdB.

Les motifs utilisés sont définis, par exemple, de la manière suivante :

$$Desc = f\left(AdB, L, D\right)$$

où :

f() représente la fonction du motif, ladite fonction renvoyant les L adresses partant de l'adresse AdB, lesdites L adresses étant espacées de D adresses ;
Desc représente le descripteur de motif, c'est-à-dire la suite d'adresses résultant de l'application de la fonction f( ) avec le jeu de paramètres AdB, L et D;
AdB représente l'adresse de base, ladite adresse correspondant à la première adresse de la suite d'adresses composant le motif de la donnée recherchée ;
L est un nombre entier correspondant au nombre de mots binaires compris dans la donnée recherchée ;
D correspond au décalage permettant d'aller de l'adresse d'un mot binaire à l'adresse du mot binaire suivant compris dans le motif.

La table de motifs est, par exemple, chargée au démarrage du système. Cette table de motifs peut être une table de hachage.

Dans un mode de réalisation, lorsqu'un coeur comportant une table de motifs requiert un accès mémoire à une donnée associée à une adresse mémoire AbB et qu'un motif est trouvé, ce coeur envoie un message à un autre coeur dit coeur gestionnaire de motif CGM en charge de la gestion de ce motif, ledit coeur CGM ayant pour fonction de trouver la donnée associée au motif dans sa mémoire cache et de l'envoyer au coeur demandeur.

Chaque coeur du système est, par exemple, identifié par un index, l'index d'un coeur CGM étant déterminé en utilisant l'expression :

$$CGM = (AdB/ TP) \% N$$

dans laquelle :

CGMi représente l'index du coeur gestionnaire de motifs ;
TP représente la taille des pages mémoires du système ;
AdB représente l'adresse de base de la donnée recherchée ;
N représente le nombre total de coeur du système.

Une table de cohérence peut être mémorisée dans au moins l'un des coeurs du système, ladite table comprenant une indication de la présence ou de l'absence de données numériques dans la mémoire cache d'autres coeurs du système.

Selon un aspect de l'invention, un coeur est dit coeur gestionnaire classique CGC quand il comporte une donnée recherchée par un autre coeur dit coeur demandeur et comportant une table de cohérence, ladite donnée ayant été localisée dans le coeur CGC grâce à ladite table, un coeur CGC étant identifié par le coeur demandeur en utilisant l'expression suivante :

$$CGCi = (AdB/TL) \% N$$

dans laquelle :

CGCi représente l'index du coeur gestionnaire classique ;
TL représente la taille d'une ligne de mémoire cache.

Les coeurs sont, par exemple, interconnectés par un réseau à topologie de type « mesh ».

L'invention a aussi pour objet un procédé de recherche de donnée pour accès mémoire par un coeur compris dans un système multi-coeurs tel que décrit précédemment, les étapes suivantes étant appliquées lorsqu'un accès à une donnée mémorisée dans le système est demandé par ledit coeur

- une étape de recherche de la donnée recherchée dans la mémoire cache dudit coeur ;
- si la recherche est infructueuse, une étape de vérification de la présence de la donnée recherchée dans la mémoire cache d'un autre coeur en utilisant une table de motifs ;
- si un motif associé à la donnée recherchée est trouvé, une étape d'envoi d'un unique message d'accès comportant les adresses du motif au coeur en charge dudit motif.

Le procédé comporte par exemple une étape de vérification de la présence de la donnée recherchée dans la mémoire cache d'un autre coeur en utilisant une table de cohérence.

Avantageusement, la mise en oeuvre de l'invention permet une amélioration du temps d'exécution des applications mis en oeuvre par des systèmes multi-coeurs, ainsi qu'une empreinte silicium limitée pour le support matériel mettant en oeuvre le procédé de maintien de cohérence de cache.

D'autres caractéristiques et avantages de l'invention apparaîtront à l'aide de la description qui suit donnée à titre illustratif et non limitatif, faite en regard des dessins annexés parmi lesquels :

- la figure 1 donne un exemple de puce multi-coeurs ;
- les figures 2A, 2B, 2C et 2D donnent un exemple des différentes phases d'exécution d'une demande d'écriture par un coeur pour maintenir la cohérence de la mémoire cache ;
- la figure 3 présente un exemple d'architecture de coeur selon l'invention ;
- la figure 4 donne un exemple de table de motifs présente dans les coeurs d'un système multi-coeurs selon l'invention ;
- la figure 5 donne un exemple de succession d'opérations et d'envois de messages entre plusieurs coeurs appartenant à un système multi-coeurs mettant en oeuvre l'invention ;
- la figure 6 donne un exemple de demande/requête d'écriture avec migration.

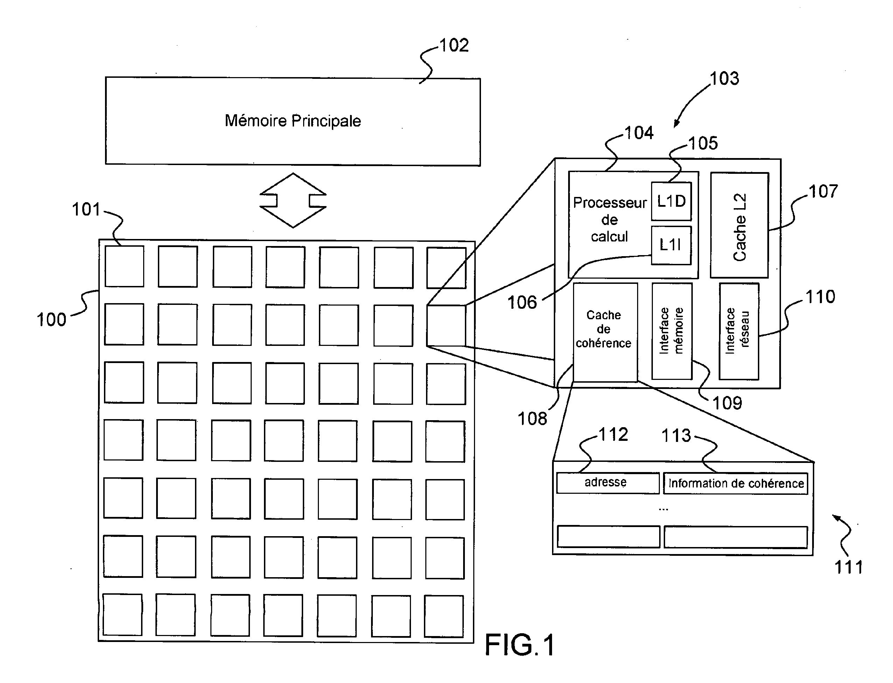

La figure 1 donne un exemple de puce multi-coeurs 100 composée de 49 coeurs de calcul 101. Une telle architecture peut comprendre en pratique un nombre quelconque de coeurs, par exemple 64. Elle est habituellement associée à une mémoire principale 102, ladite mémoire principale permettant de mémoriser de grandes quantités de données. Ce type de mémoire implique cependant un temps d'accès beaucoup plus important que pour les mémoires caches.

Les coeurs compris dans ce système multi-coeurs sont interconnectés par un réseau à topologie de type « mesh », c'est-à-dire que les communications sont établies de proches en proches, sans organisation centralisée.

Dans ce type d'architecture, un procédé de maintien de la cohérence des données mémorisées intervient notamment lorsqu'une donnée mémorisée dans la mémoire principale du système se retrouve répliquée dans les mémoires caches des différents coeurs au gré des lectures et des écritures.

Un coeur 103 est habituellement composé d'un processeur de calcul 104, d'une mémoire cache de niveau 1 dite L1 pour la mémorisation d'instructions 105 et de données 106, d'une mémoire cache de niveau 2 dite L2 107, d'un répertoire pour la cohérence de la mémoire cache de niveau 2 108, et de modules d'interfaces avec la mémoire principale 109 et les autres coeurs du système 110. - La mémoire physique du système multi-coeurs est partagée et distribuée sur les coeurs avec un espace d'adressage unique.

Dans la suite de la description, le terme « granularité » désigne la taille du plus petit ensemble de bits pris en charge par le protocole de cohérence de cache, un tel ensemble étant appelé unité de cohérence.

L'utilisation d'une granularité fine permet de verrouiller un espace mémoire de petite taille sans affecter les accès aux autres données. Cette stratégie entraîne la gestion d'un volume important de métadonnées et peut avoir pour conséquence des problèmes de stockage et de temps de calcul.

A l'inverse, une granularité trop importante induit un problème de faux partage, là où le verrouillage d'une unité de cohérence interdit l'accès à des données non concernées par la mise-à-jour. Le choix de la granularité d'un protocole de cohérence reste donc avant tout dicté par l'infrastructure matérielle sous-jacente. La granularité dépend de l'architecture du système multi-coeur.

La granularité peut être choisie, par exemple, égale à la longueur d'une ligne de mémoire cache. Des valeurs typiques de granularité sont 64 ou 128 octets selon l'architecture matérielle.

Dans la suite de la description, le terme « donnée » fait référence à un ensemble de mots binaires, lesdits mots binaires comportant un nombre de bits inférieur ou égal à l'unité de cohérence. Un mot binaire est associé à une mémoire ce qui implique que, si une donnée comporte plus d'un mot binaire, celle-ci est associée à une pluralité d'adresses.

Afin de gérer la cohérence des copies d'une donnée en mémoire cache, les procédés de maintien de la cohérence de cache s'appuient habituellement sur une représentation de l'état du système. Cette représentation est mise en oeuvre, par exemple, à l'aide d'une table appelée table ou cache de cohérence 108 et est mémorisée dans chacun des coeurs du système. Pour un coeur donné, cette table contient pour chaque donnée des informations sur sa présence dans la mémoire cache d'autres coeurs du système ainsi que le mode d'accès courant à la donnée. Cette table est composée, par exemple, de lignes comprenant une adresse 112 et un ensemble de bits contenant des informations sur la cohérence 113 de ladite donnée mémorisée à cette adresse 112.

Un exemple de procédé de maintien cohérence de cache est mis en oeuvre dans le cadre du protocole MESI, acronyme venant de l'expression anglo-saxonne « Modified Exclusive, Shared, Invalid ». Quand ce protocole est utilisé, le mode d'accès courant à une donnée peut être représenté par l'un des quatre états possibles. Ces quatre états sont définis ci-après :

- l'état « modifié », appelé aussi état M, indique que la donnée présente dans la mémoire cache n'est pas cohérente avec la donnée mémorisée dans la mémoire principale, ce qui implique que la mémoire principale doit être potentiellement mise à jour. Les copies de cette donnée localisées sur les autres coeurs ou en mémoire principale sont potentiellement différentes et ne peuvent être utilisées ;
- l'état « exclusif », appelé aussi état E, indique que la donnée est cohérente, c'est-à-dire qu'elle est identique à celle présente dans la mémoire principale. De plus, elle n'est présente que dans la mémoire cache du coeur auquel est associé ce cache de cohérence. Dans ce cas, la donnée est en accès exclusif sur ce coeur ;

- l'état « partagé », appelé aussi état S, indique que la donnée est cohérente, en lecture seule sur ce coeur et que des copies dans le même état sont peut-être présentes sur d'autres coeurs ;
- l'état « invalide », appelé aussi état 1, indique que la donnée présente sur ce coeur n'est pas à jour.

Les mots binaires d'information de cohérence 113 présents dans la table de cohérence 111 comprennent un champ indiquant quel est l'état de la donnée ainsi qu'un vecteur de B bits indiquant quels sont les coeurs dans lesquels une copie de ladite donnée est mémorisée. A titre d'exemple, la convention suivante peut être choisie : le i-ème bit dudit vecteur indique la présence ou l'absence d'une copie de cette donnée sur le i-ème coeur.

La représentation de l'état du système est gérée habituellement sur le principe d'un catalogue centralisé par un coeur particulier désigné habituellement par l'expression anglo-saxonne « Home-Node » et appelé dans la suite de la description coeur gestionnaire classique CGC. Lorsque le système multi-coeurs atteint une échelle importante, par exemple lorsque le système comporte plusieurs dizaines de coeurs, ce coeur gestionnaire est alors très sollicité et des problèmes de performances surviennent. Le catalogue peut alors être distribué en différentes vues locales présentes sur plusieurs voir sur la totalité des coeurs du système, chacun des coeurs étant responsable d'un sous-ensemble de données. Dans ce cas, chaque coeur du système peut être vu comme un coeur CGC, par exemple pour une demande d'accès en lecture ou écriture à une donnée particulière par un coeur demandeur.

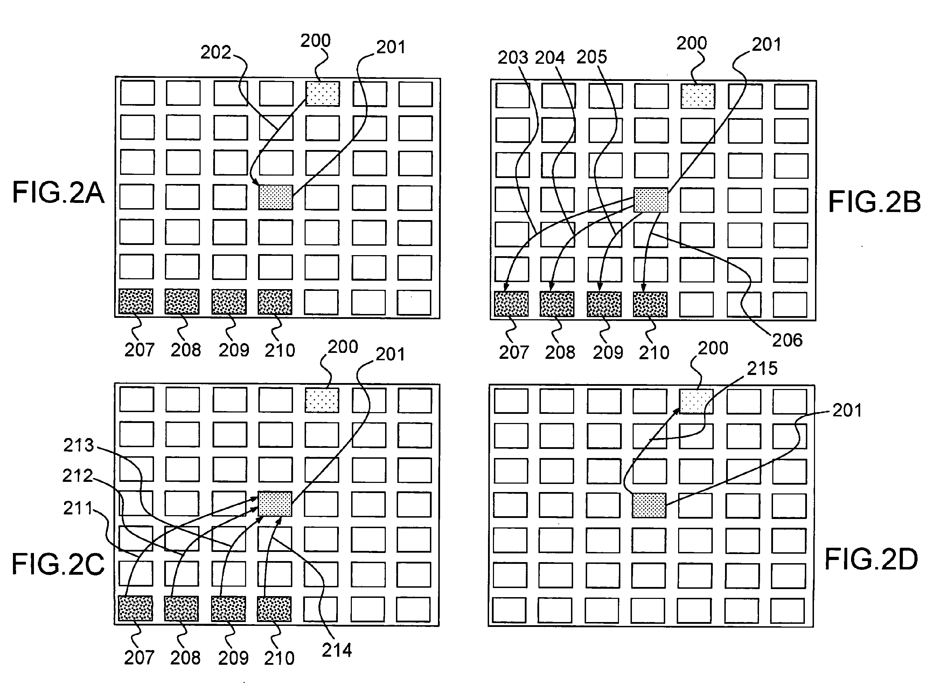

Les figures 2A, 2B, 2C et 2D donnent un exemple des différentes phases exécutées lors d'une demande d'écriture par un coeur pour maintenir la cohérence de la mémoire cache.

Ces phases correspondent à la transmission de messages entre les différents coeurs et à l'exécution par les coeurs des processus associés. Dans cet exemple, un coeur appelé coeur demandeur CD 200 a un besoin d'écriture de données. A cette fin, il contacte un coeur gestionnaire classique CGC 201. Le coeur gestionnaire CGC contient des informations permettant de savoir quels sont les coeurs comportant une copie de la donnée recherchée, c'est-à-dire de la donnée à mettre à jour.

Dans un premier temps, comme illustré sur la figure 2A, le coeur demandeur 200 envoie un message 202 au coeur CGC 201. Ledit message comporte l'adresse de la donnée recherchée.

Dans un deuxième temps et comme illustré sur la figure 2B, des messages d'accès en mode exclusif 203, 204, 205, 206 sont envoyés aux coeurs 207, 208, 209, 210 ayant en leur possession une copie de la donnée à mettre à jour en leurs précisant l'adresse mémoire de ladite donnée.

Dans un troisième temps et comme illustré sur la figure 2C, les coeurs 207, 208, 209, 210 invalident leur copie et le notifient 211, 212, 213, 214 au coeur CGC 201 en retour.

Dans un quatrième temps et comme illustré sur la figure 2D, une autorisation d'accès en écriture 215 est transmise au demandeur, potentiellement avec une mise à jour de la donnée.

Il apparaît dans cet exemple qu'un nombre M significatif de messages est requis pour effectuer une demande d'accès en écriture. Certaines applications requièrent la lecture et/ou l'écriture de données composées de mots binaires mémorisés à des emplacements mémoire qui ne sont pas contigües, c'est-à-dire que les adresses associées à ces mots ne se suivent pas. C'est le cas par exemple de nombreuses applications de traitement d'image.Dans le cadre de certaines applications les adresses associées aux mots binaires composant une donnée sont prévisibles et régulières. Un exemple de telle application est l'application de calcul de l'image intégrale, comme décrite dans l'article de B. Kisacanin intitulé Intégral Image Optimizations for Embedded Vision Applications, SSIAI 2008, IEEE Southwest Symposium on Image Analysis and Interprétation, pp.181-184, 24-26 March 2008. Le traitement consiste en la somme cumulative d'une matrice sur ses deux dimensions. Pour cela, l'algorithme doit accéder à des blocs rectangulaires de l'image à traiter.

Les procédés de maintien de cohérence de cache classiques opèrent individuellement sur chacun des mots binaires composant une donnée.

Dans le cadre d'applications de traitement d'image, l'image est mémorisée en plaçant les lignes L les unes à la suite des autres dans l'espace mémoire du système utilisé. Dans un système multi-coeurs, un nombre donné M de message est requis pour un accès mémoire. La lecture d'une colonne d'images dans une image composée de C colonnes et de L lignes de pixels entraîne alors l'émission de LxM messages, car la donnée recherchée comporte L mots binaires. Avantageusement, l'invention permet d'améliorer les performances des procédés classiques de maintien de la cohérence de cache en prenant en compte les caractéristiques prévisibles des accès en mémoire afin de réduire le nombre de messages émis. Il est notamment possible de passer de LxM messages émis à M messages émis pour une demande d'accès en écriture, en lecture ou une demande d'invalidation par exemple.

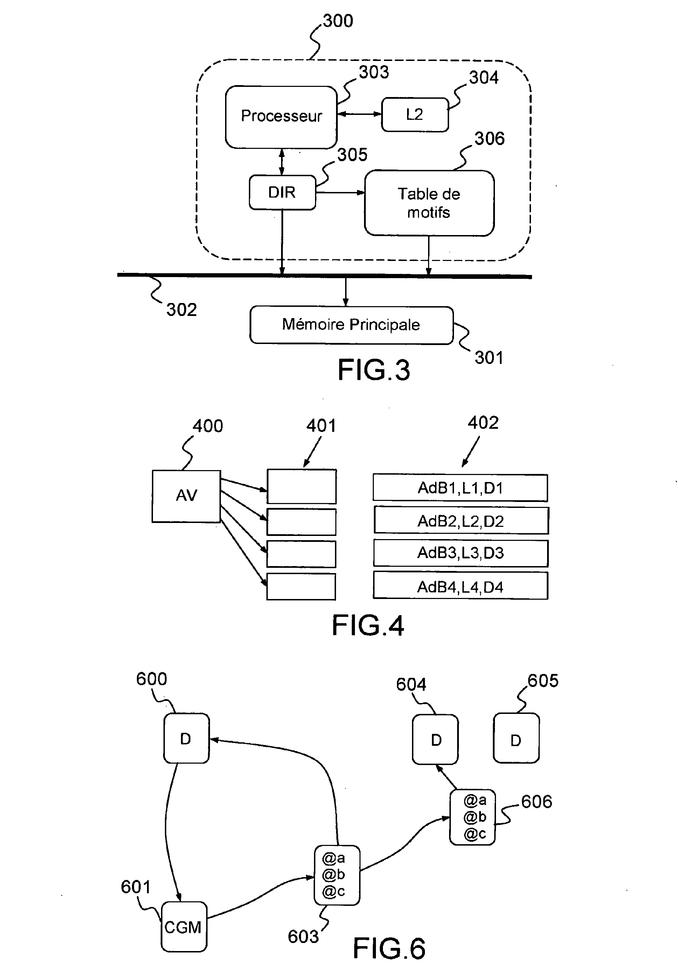

La figure 3 présente un exemple d'architecture de système multi-coeurs selon l'invention. Dans cet exemple, un seul coeur 300 est représenté. Celui-ci peut transmettre et/ou recevoir des données comprises dans la mémoire principale 301 à l'aide d'un bus de communication 302. Dans un but de clarté de l'exposé, un seul coeur est représenté sur cette figure, mais l'invention concerne un système multi-coeurs. Ainsi, une pluralité de coeurs peut accéder à la mémoire principale ainsi qu'à la mémoire cache des autres coeurs du système par l'intermédiaire dudit bus de communication 302.

Préférentiellement, le système multi-coeur selon l'invention se base sur un réseau de type « mesh » afin de permettre une gestion de la cohérence de cache performante, et ce même pour un nombre de coeurs important.

Le coeur 300 comprend processeur de calcul CPU 303, ledit CPU comprenant une mémoire cache privée de niveau L1, une mémoire cache partagée de niveau L2 304, une table de cohérence 305 et une autre table 306 appelée table de motifs 306. La table des motifs est une zone du coeur dans laquelle sont mémorisés des motifs. Un motif correspond à un ensemble d'adresses associées à une donnée. Pour obtenir cet ensemble d'adresses, une fonction de motif est utilisée. Cette fonction permet de déterminer les adresses d'un motif à partir de paramètres comme par exemple une adresse de base AdB. Les motifs sont utilisés pour accéder rapidement à une donnée composée de plusieurs mots binaires. L'utilisation de ces motifs est particulièrement utile lorsque lesdits mots binaires sont mémorisés à des adresses qui ne se suivent pas. La table de motifs 306 est destinée à la mise en oeuvre des accès mémoires. La table des motifs peut être gérée entièrement à partir du processeur du coeur 303 ou bien en collaboration avec un accélérateur matériel 306. Cet accélérateur matériel peut être mis en oeuvre dans le coeur, ledit accélérateur ayant pour fonctions le stockage de la table de motifs ainsi que la mise en correspondance entre une adresse d'entrée et l'un des motifs mémorisés.

Un coeur comprend habituellement plusieurs zones de mémoire cache. Les données de cache de niveau L1 sont toujours présentes dans le cache de niveau L2.

Lorsque le coeur cherche à accéder à une donnée, un procédé comportant plusieurs étapes peut être appliqué. Un exemple est donné ci-après.

Le procédé comporte une première étape pendant laquelle il est vérifié si la donnée recherchée se trouve dans le cache de niveau L1.

Si la donnée y est trouvée, le procédé se termine.

Si la donnée est absente, un défaut de cache de niveau L1 est détecté.

Une deuxième étape a ensuite pour fonction de vérifier si la donnée recherchée se trouve dans le cache de niveau L2.

Si la donnée y est trouvée, le procédé se termine.

Si la donnée est absente, un défaut de cache de niveau L2 est détecté.

En cas de défaut de cache de niveau L2, une étape s'appuie sur l'analyse de la table de cohérence 305. Ladite table est, par exemple, analysée ligne par ligne.

Si l'adresse de la donnée est trouvée dans la table de cache, le processeur pour accéder à cette donnée et l'exécution du procédé se termine.

Si l'adresse de la donnée n'y est pas trouvée, un défaut de table de cache est détecté.

En cas de défaut de table de cache, une étape du procédé a pour fonction d'interroger le tableau de motifs 306 et si un motif est trouvé, d'envoyer un message permettant d'obtenir les données associées à l'application du motif et d'avoir accès ainsi à la donnée recherchée. L'utilisation des motifs et de la table des motifs est décrite ci-après.

Dans le cadre de l'invention, les motifs sont utilisés pour déterminer rapidement la localisation dans le système multi-coeurs des mots binaires composant une donnée. Différents formats de motifs peuvent être envisagés.

Préférentiellement, les motifs peuvent être déterminés en tenant compte de deux critères.

Le premier critère consiste à maximiser la concision de la fonction associée au motif. Plus la fonction associée au motif est concise, plus l'espace mémoire nécessaire à son stockage est réduit.

Le deuxième critère consiste à maximiser l'expressivité du format et les différentes classes de motifs pouvant être concernées. Des motifs complexes peuvent ainsi être mémorisés. Ces deux critères tendent malheureusement à être antagonistes.

A titre d'exemple, le motif simple suivant peut être utilisé :

$$Desc = f(AdB, L, D) \qquad (1)$$

dans lequel :

$f(\ )$ représente la fonction du motif. Cette fonction renvoie, par exemple, les L adresses partant de l'adresse AdB, lesdites L adresses étant espacées de D;

$Desc$ représente le descripteur de motif, c'est-à-dire la suite d'adresses résultant de l'application de la fonction $f(\ )$ avec le jeu de paramètres AdB, $L$ et $D$ ;

$AdB$ représente l'adresse de base, ladite adresse correspondant à la première adresse de la suite d'adresses composant le motif de la donnée recherchée ;

L est un nombre entier correspondant au nombre de mots binaires compris dans la donnée recherchée ;

D correspond au décalage permettant d'aller de l'adresse d'un mot binaire à l'adresse du mot binaire suivant compris dans le motif. En d'autres termes, D correspond à la distance entre deux adresses consécutives.

En utilisant le motif donné en exemple (1), il est par exemple possible d'accéder aux L pixels d'une colonne d'une image comportant C colonnes de pixels en indiquant que la longueur du motif est L et le décalage est C.

La sélection des motifs pour une application donnée peut être réalisée par analyse des accès mémoires lors d'exécutions de ladite application. Une fois que les motifs ont été sélectionnés, ces derniers peuvent être implémentés ou mémorisés dans une table de motifs.

Ces analyses peuvent être mises en oeuvre en utilisant, par exemple, des techniques de profilage de l'application considérée.

La figure 4 donne un exemple de table de motifs. Comme explicité précédemment, l'ensemble des motifs associés à l'application mise en oeuvre par le système multi-coeurs est mis à la disposition des coeurs de calcul. Pour cela, une table de motifs est présente dans chaque coeur. La table de motifs est, par exemple, chargée au démarrage du système. Une table de hachage peut être utilisée en tant que table de motifs dans la mémoire de l'accélérateur matériel chargé de la gestion de la table de motif lorsqu'un tel accélérateur est utilisé.

Une table de motifs ayant la structure d'une table de hachage possède la structure d'une mémoire cache avec une clé, ladite clé étant aussi désignée par le mot anglais « trigger ». La table de hachage permet de faire correspondre l'adresse à vérifier AdB 400 à l'un des motifs mémorisés 402. Pour cela, une fonction de hachage est utilisée. Elle est appliquée pour chaque clé de la table des motifs. Cette fonction utilise en entrée l'une des clés 401 et l'adresse recherchée AdB 400 comme paramètres d'entrées. Elle renvoie comme résultat un booléen indiquant si le motif associé à l'adresse AdB est présent dans la table de motifs ou non. Si le motif est présent, l'adresse AdB est comparée à l'ensemble des adresses de base des motifs mémorisés AdB1, AdB2, AdB3, AdB4 afin de déterminer quel est le bon motif associé à l'adresse recherchée. L'utilisation d'une telle fonction de hachage permet de ne comparer l'adresse recherchée AdB aux adresses AdB1, AdB2, AdB3, AdB4 des motifs mémorisés que lorsqu'il est certain qu'un motif dont l'adresse de base est égale à AdB est mémorisé dans la table de motifs. Cela a pour avantage de réduire la complexité de calcul requise pour la recherche d'un motif mémorisé à partir de l'adresse recherchée AdB.

A titre d'exemple, si un coeur recherche la donnée présente à l'adresse @11 et que cette adresse correspond à l'une des adresses de base mémorisées 402 dans la table de motifs, un message est envoyé au processeur du coeur par un module chargé de la gestion de la table de motifs dudit coeur, ledit message indiquant qu'un motif a été trouvé et lui transmet le descripteur de ce motif.

En utilisant l'exemple de motif de l'expression (1), le descripteur correspondant à l'adresse de base @11 avec L=4 et D=2 sera égale à {@ 11, 4, 2}. Dans cet exemple, le descripteur de motif sera égal à :

$$f(@11,4,2) = \{@11, @13, @15, @17\} \qquad (2)$$

Dans un mode de réalisation préféré, le procédé de maintien de la cohérence de mémoire cache selon l'invention est mis en oeuvre dans un système multi-coeurs en s'appuyant d'une part sur une partie logicielle exécutée par les processeurs des coeurs et d'autre part sur un accélérateur matériel dédié à la gestion des motifs. La partie logicielle correspond à un protocole hybride prenant en compte les motifs d'accès mémoire. La partie logicielle comprend, par exemple, les moyens suivants :

- des moyens pour différencier les requêtes d'accès mémoire classiques des requêtes spéculatives ;
- des moyens pour émettre des requêtes dites spéculatives permettant de lire toutes les adresses d'un motif à partir d'une adresse de base ;
- les requêtes spéculatives envoient des messages par page (granularité de page).

La figure 5 donne un exemple de succession d'opérations et d'envois de messages entre plusieurs coeurs appartenant à un système multi-coeurs mettant en oeuvre l'invention.

Dans cet exemple, un coeur appelé coeur demandeur CD 515 a besoin de lire une donnée numérique pour pouvoir exécuter un processus dont il a la charge.

Si cette donnée n'est pas dans sa mémoire cache de niveau L1, il va vérifier si ladite donnée n'est pas présente dans sa mémoire cache de niveau L2 500. Suite à cette vérification, soit la donnée est trouvée et le processeur du coeur demandeur 515 y accède 501, soit la donnée n'y est pas et un défaut de cache est détecté.

Lorsqu'un défaut de cache est détecté, le processeur du coeur demandeur 515 va tenter de trouver la donnée recherchée ailleurs que dans sa mémoire cache.

Les tables de cohérence et de motifs sont alors consultées 502.

Si suite à la consultation de la table de cohérence l'adresse correspondant à la donnée recherchée est trouvée, un message d'accès est envoyé 504 à un coeur gestionnaire classique CGC 514 associé à l'adresse recherchée AdB, un coeur gestionnaire classique ne prenant en compte la lecture de données qu'à une adresse unique. Le gestionnaire classique CGC 514 vérifie alors si la donnée n'est pas présente dans sa mémoire cache 509. Si elle l'est, un message de confirmation ACK est envoyé au coeur demandeur 510 avec la donnée recherchée, sinon un accès externe à la mémoire principale 511 permet d'acquérir la donnée et un message de confirmation ACK 512 est ensuite envoyé au coeur demandeur avec la donnée.

Si après consultation de la table de cohérence la donnée n'est pas trouvée, c'est au tour de la table de motifs d'être consultée par le coeur demandeur. Si suite à la consultation 502 de la table de motifs, l'adresse correspondant à la donnée recherchée est trouvée, un message appelé message spéculatif est envoyé au coeur gestionnaire du motif CGM 513. Ce message contient le descripteur du motif correspondant à la donnée recherchée ainsi que son adresse de base, celui-ci étant normalement inclus dans ledit descripteur. Le coeur CGM 513 vérifie alors que la donnée est présente dans sa mémoire cache.

Si c'est le cas, un message ACK de confirmation 506 est envoyé au coeur demandeur simultanément avec la donnée requise dès que la donnée recherchée est retrouvée.

Au contraire, si la donnée n'est pas présente en mémoire cache, celle-ci est acquise 507 par un accès externe à la mémoire principale. Un message ACK de confirmation 508 est alors transmis au coeur demandeur avec la donnée recherchée. Sur le coeur CGM 513, le processus de recherche des données retourne en priorité la donnée demandée, puis itère sur la suite du motif. C'est pour cette raison que la requête est qualifiée de spéculative.

Il apparaît alors que l'introduction d'une table de motifs sur chaque coeur permet de mettre en place deux flux de messages pour les accès aux données. Un premier flux est généré par des accès à des données qui ne sont pas référencées dans la table des motifs.

Un second flux de messages est généré par les accès aux adresses présentes dans la table des motifs.

Dans une architecture multi-coeurs, les coeurs sont habituellement associés à des index. Ainsi, chaque coeur appartenant à un système multi-coeurs comportant N coeurs sera associé à un index allant de 1 à N par exemple.

A titre d'exemple, des fonctions judicieusement choisies permettent au coeur demandeur de retrouver l'index du coeur gestionnaire classique CGC et du coeur gestionnaire de motifs. Pour retrouver le coeur gestionnaire classique associé à une donnée ayant pour adresse de base AdB, le coeur demandeur peut utiliser l'expression suivante :

$$CGCi = (AdB /TL) \% N \qquad (3)$$

Cette expression découle de l'algorithme de round robin appliqué avec une granularité de la taille d'une ligne de cache TL. CGCi représente l'index du coeur gestionnaire classique.

Dans ce cas, la fonction pour retrouver le coeur gestionnaire de motifs CGM est :

$$CGMi = (AdB/ TP) \% N \qquad (4)$$

CGMi représente l'index du coeur gestionnaire de motifs. L'algorithme de round-robin est, cette fois-ci, appliqué avec une granularité de la taille TP des pages. La granularité des données, c'est-à-dire l'unité de cohérence, reste cependant égale à la taille d'une ligne de cache, le but étant d'éviter le problème du faux-partage, c'est-à-dire la saturation du système par un grand nombre de demandes de lecture ou d'écriture, par exemple quand tous les coeurs du système font une demande de lecture au même coeur.

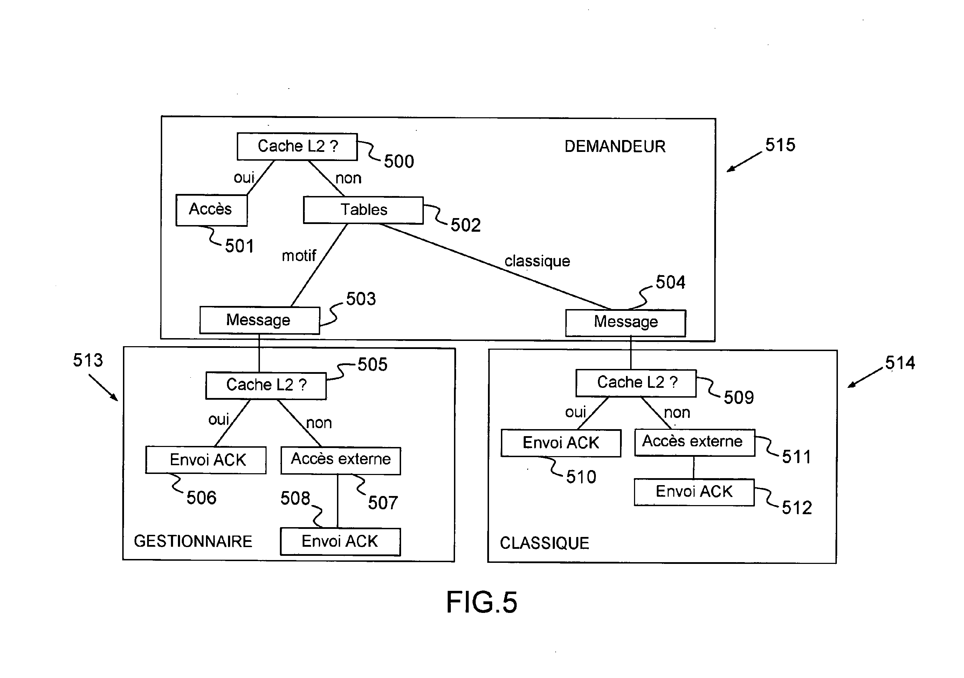

La figure 6 donne un exemple de demande/requête d'écriture avec migration de données.

La migration de données permet de rapprocher les données mémorisées en mémoire cache des coeurs les utilisant pour que leur accès soit facilité.

Un coeur demandeur 600 émet une requête en écriture à l'adresse @a. Dans cet exemple, un défaut de cache et détecté. Le tableau de motifs du coeur 600 est consulté et une correspondance de motif est identifiée, le descripteur du motif étant {@a, @b, @c}. Ce descripteur est alors transmis au coeur gestionnaire de motif CGM approprié 601, c'est-à-dire au coeur associé au motif identifié par le coeur demandeur 600.

En lecture partagée, le coeur CGM 601 envoie un message au(x) coeur(s) 603 comportant le motif, ledit message comportant la donnée à écrire correspondant aux adresses du motif.

Afin d'accélérer l'accès aux données des adresses @a, @b et @c par d'autres coeurs demandeurs 604, 605, le coeur CGM 601 envoie également un message de migration au coeur contenant ces données afin que celui-ci puisse les copier dans la mémoire cache d'un autre coeur 606 plus proche des autres demandeurs. Les demandeurs proches de ce coeur pourront alors accéder rapidement à ces données. En d'autres termes, le coeur CGM 601 a anticipé la demande d'adresse spéculative @a, @b, @c, la conséquence étant la migration des données associées.

## Revendications

1.  Système multi-coeurs comportant une pluralité de coeurs et d'un bus de communication (302) permettant aux coeurs de communiquer entre eux, un coeur étant composé d'un processeur (303) et d'au moins une zone de mémoire cache (304) **caractérisé en ce que** :

    - au moins un coeur comporte une table de motifs (306) dans laquelle sont mémorisés un ensemble de motifs, un motif correspondant à une suite d'adresses mémoires associées à une donnée numérique composée de mots binaires mémorisés à ces adresses ;
    - ce coeur comporte en outre des moyens pour faire correspondre l'une des adresses mémoires AdB d'une donnée numérique à un motif lui étant associé lorsque ledit coeur a besoin d'accéder à cette donnée ainsi que des moyens pour transmettre un message unique d'accès à une donnée numérique localisée dans la mémoire cache d'au moins un autre coeur du système, ledit message incluant les adresses mémoires composant le motif de la donnée recherchée.

2.  Système selon la revendication 1 dans lequel l'ensemble des coeurs du système comporte une table de motifs (306).

3.  Système selon l'une quelconque des revendications précédentes dans lequel la table de motifs d'un coeur (306) est contrôlée par le processeur dudit coeur (303) en collaboration avec un accélérateur matériel, ledit accélérateur ayant pour fonctions le stockage de la table de motifs ainsi que la mise en correspondance entre une adresse mémoire d'entrée AdB et l'un des motifs mémorisés.

4.  Système selon l'une quelconque des revendications précédentes dans lequel la suite d'adresses composant un motif est obtenue par une fonction de motif appliquée à l'adresse mémoire d'entrée AdB.

5. Système selon l'une quelconque des revendications précédentes dans lequel les motifs utilisés sont définis de la manière suivante :

$$Desc = f\left(AdB, L, D\right)$$

où :

f( ) représente la fonction du motif, ladite fonction renvoyant les L adresses partant de l'adresse AdB, lesdites L adresses étant espacées de D adresses ;
Desc représente le descripteur de motif, c'est-à-dire la suite d'adresses résultant de l'application de la fonction f( ) avec le jeu de paramètres AdB, L et D ;
AdB représente l'adresse de base, ladite adresse correspondant à la première adresse de la suite d'adresses composant le motif de la donnée recherchée ;
L est un nombre entier correspondant au nombre de mots binaires compris dans la donnée recherchée ;
D correspond au décalage permettant d'aller de l'adresse d'un mot binaire à l'adresse du mot binaire suivant compris dans le motif.

6. Système selon l'une quelconque des revendications précédentes dans lequel la table de motifs est chargée au démarrage du système.

7. Système selon l'une quelconque des revendications précédentes dans lequel la table de motifs est une table de hachage.

8. Système selon l'une quelconque des revendications précédentes dans lequel lorsqu'un coeur comportant une table de motifs requiert un accès mémoire à une donnée associée à une adresse mémoire AbB et qu'un motif est trouvé, ce coeur envoie un message à un autre coeur dit coeur gestionnaire de motif CGM en charge de la gestion de ce motif, ledit coeur CGM ayant pour fonction de trouver la donnée associée au motif dans sa mémoire cache et de l'envoyer au coeur demandeur.

9. Système selon la revendication 8 **caractérisé en ce que** chaque coeur du système est identifié par un index, l'index d'un coeur CGM étant déterminé en utilisant l'expression :

$$CGM = (AdB/ TP) \% N$$

dans laquelle :

CGMi représente l'index du coeur gestionnaire de motifs ;
TP représente la taille des pages mémoires du système ;
AdB représente l'adresse de base de la donnée recherchée ;
N représente le nombre total de coeur du système.

10. Système selon l'un quelconque des revendications précédentes **caractérisé en ce qu'**une table de cohérence (305) est mémorisée dans au moins l'un des coeurs du système, ladite table comprenant une indication de la présence ou de l'absence de données numériques dans la mémoire cache d'autres coeurs du système.

11. Système selon la revendication 10 **caractérisé en ce qu'**un coeur est dit coeur gestionnaire classique CGC quand il comporte une donnée recherchée par un autre coeur dit coeur demandeur et comportant une table de cohérence, ladite donnée ayant été localisée dans le coeur CGC grâce à ladite table, un coeur CGC étant identifié par le coeur demandeur en utilisant l'expression suivante :

$$CGCi = (AdB\ /TL)\ \%\ N$$

dans laquelle :

CGCi représente l'index du coeur gestionnaire classique ;
TL représente la taille d'une ligne de mémoire cache.

12. Système selon l'une quelconque des revendications précédentes **caractérisé en ce que** les coeurs sont interconnectés par un réseau à topologie de type « mesh ».

13. Procédé de recherche de donnée pour accès mémoire par un coeur compris dans un système multi-coeurs selon l'une quelconque des revendications précédentes, les étapes suivantes étant appliquées lorsqu'un accès à une donnée mémorisée dans le système est demandé par ledit coeur :

- une étape de recherche de la donnée recherchée dans la mémoire cache dudit coeur ;
- si la recherche est infructueuse, une étape de vérification de la présence de la donnée recherchée dans la mémoire cache d'un autre coeur en utilisant une table de motifs ;
- si un motif associé à la donnée recherchée est trouvé, une étape d'envoi d'un unique message d'accès comportant les adresses du motif au coeur en charge dudit motif.

14. Procédé selon la revendication 13 **caractérisé en ce qu'**il comporte une étape de vérification de la présence de la donnée recherchée dans la mémoire cache d'un autre coeur en utilisant une table de cohérence (305).

**Patentansprüche**

1. Multikernsystem, das mehrere Kerne und einen Kommunikationsbus (302) umfasst, der es den Kernen gestattet, miteinander zu kommunizieren, wobei ein Kern aus einem Prozessor (303) und wenigstens einer Cache-Speicherzone (304) zusammengesetzt ist, **dadurch gekennzeichnet, dass**:

wenigstens ein Kern eine Mustertabelle (306) umfasst, in der ein Satz von Mustern gespeichert ist, wobei ein Muster einer Folge von Speicheradressen in Verbindung mit numerischen Daten entspricht, die aus an diesen Adressen gespeicherten binären Wörtern zusammengesetzt sind;
dieser Kern außerdem Mittel zum Bewirken, dass eine der Speicheradressen AdB von numerischen Daten einem Muster entspricht, das ihnen zugeordnet wird, wenn der Kern auf diese Daten zugreifen muss, sowie Mittel zum Übertragen einer eindeutigen Zugangsnachricht zu digitalen Daten umfasst, die sich im Cache-Speicher von wenigstens einem anderen Kern des Systems befinden, wobei die Nachricht Speicheradressen beinhaltet, die das Muster der gesuchten Daten enthalten.

2. System nach Anspruch 1, bei dem der Satz von Kernen des Systems eine Mustertabelle (306) umfasst.

3. System nach einem der vorherigen Ansprüche, bei dem die Mustertabelle eines Kerns (306) vom Prozessor des Kerns (303) in Zusammenarbeit mit einem Hardware-Beschleuniger gesteuert wird, wobei der Beschleuniger die Funktionen des Speicherns der Mustertabelle sowie der Herstellung einer Entsprechung zwischen einer Eingangsspeicheradresse AdB und einem der gespeicherten Muster hat.

4. System nach einem der vorherigen Ansprüche, bei dem die ein Muster umfassende Adressenfolge durch eine Musterfunktion erhalten wird, die auf die Eingangsspeicheradresse AdB angewandt wird.

5. System nach einem der vorherigen Ansprüche, bei dem die verwendeten Muster auf die folgende Weise definiert werden:

$$Desc = f(AdB,L,D)$$

wobei:

f( ) die Funktion des Musters repräsentiert, wobei die Funktion die L Adressen ausgehend von der Adresse AdB sendet, wobei die L Adressen durch D Adressen beabstandet sind;

*Desc* den Musterdeskuptor repräsentiert, d.h. die Folge von Adressen, der aus der Anwendung der Funktion f( ) mit dem Parametersatz *AdB, L und D* resultiert;

*AdB* die Basisadresse repräsentiert, wobei die Adresse der ersten Adresse der Adressenfolge entspricht, die das Muster der gesuchten Daten enthält;

*L* eine ganze Zahl ist, die einer Zahl von binären Wörtern entspricht, die in den gesuchten Daten enthalten sind;

*D* einem Versatz entspricht, der es zulässt, von der Adresse eines binären Worts zur Adresse des folgenden binären Worts zu gehen, das in dem Muster enthalten ist.

6. System nach einem der vorherigen Ansprüche, in dem die Mustertabelle beim Starten des Systems geladen wird.

7. System nach einem der vorherigen Ansprüche, bei dem die Mustertabelle eine Hash-Tabelle ist.

8. System nach einem der vorherigen Ansprüche, bei dem, wenn ein eine Mustertabelle umfassender Kern Speicherzugang zu mit einer Speicheradresse AbB assoziierten Daten erfordert und ein Muster gefunden wird, der Kern eine Nachricht zu einem anderen Kern, Musterverwaltungskern CGM genannt, sendet, der für die Verwaltung dieses Musters zuständig ist, wobei der CGM-Kern die Funktion des Findens der mit dem Muster in dem Cache-Speicher assoziierten Daten und des Sendens der Letzteren zu dem anfordernden Kern hat.

9. System nach Anspruch 8, **dadurch gekennzeichnet, dass** jeder Kern des Systems durch einen Index identifiziert wird, wobei der Index eines CGM-Kerns mittels des folgenden Ausdrucks bestimmt wird:

$$CGM = (AdB/\ TP)\ \%\ N$$

wobei:

CGMi den Index des Musterverwaltungskerns repräsentiert;
TP die Größe der Speicherseiten des Systems repräsentiert;
AdB die Basisadresse der gesuchten Daten repräsentiert;
N die Gesamtzahl von Kernen des Systems repräsentiert.

10. System nach einem der vorherigen Ansprüche, **dadurch gekennzeichnet, dass** eine Kohärenztabelle (305) in wenigstens einem der Kerne des Systems gespeichert ist, wobei die Tabelle eine Anzeige der An- oder Abwesenheit von digitalen Daten in dem Cache-Speicher von anderen Kernen des Systems umfasst.

11. System nach Anspruch 10, **dadurch gekennzeichnet, dass** ein Kern klassischer Verwaltungskern CGC genannt wird, wenn er Daten umfasst, die von einem anderen Kern, Anfragekern genannt, der eine Kohärenztabelle umfasst, gesucht werden, wobei sich die Daten dank der Tabelle in dem CGC lokalisiert sind, wobei ein CGC-Kern durch den Anfragekern mittels des folgenden Ausdrucks identifiziert wird:

$$CGCi = (AdB\ /TL)\ \%\ N$$

wobei:

CGCi den Index des klassischen Verwaltungskerns repräsentiert;
TL die Größe einer Cache-Speicherzeile repräsentiert.

12. System nach einem der vorherigen Ansprüche, **dadurch gekennzeichnet, dass** die Kerne durch ein Topologienetz des "Mesh"-Typs miteinander verbunden sind.

13. Verfahren zum Suchen von Daten für einen Speicherzugriff durch einen Kern, der in einem Mehrkernsystem nach einem der vorherigen Ansprüche enthalten ist, wobei die folgenden Schritte ausgeführt werden, wenn der Kern Zugang zu gespeicherten Daten in dem System anfordert:

einen Schritt des Suchens der gesuchten Daten in dem Cache-Speicher des Kerns;
wenn die Suche erfolglos ist, einen Schritt des Überprüfens der Anwesenheit der gesuchten Daten im Cache-Speicher eines anderen Kerns unter Verwendung einer Mustertabelle;
wenn ein mit den gesuchten Daten assoziierte Muster gefunden wird, einen Schritt des Sendens einer einzigen Zugangsnachricht, die die Adressen des Musters enthält, zu dem für das Muster zuständigen Kern.

14. Verfahren nach Anspruch 13, **dadurch gekennzeichnet, dass** es einen Schritt des Verifizierens der Anwesenheit der gesuchten Daten in dem Cache-Speicher eines anderen Kerns unter Benutzung einer Kohärenztabelle (305) beinhaltet.

**Claims**

1. A multi-core system comprising a plurality of cores and a communication bus (302) enabling the cores to communicate with one another, a core being made up of a processor (303) and of at least one cache memory area (304), **characterized in that**:

   - at least one core comprises a table of patterns (306) in which are stored a set of patterns, a pattern corresponding to a series of memory addresses associated with a digital data item made up of binary words stored at these addresses;
   - this core also comprises means for mapping one of the memory addresses AdB of a digital data item to a pattern that is associated with it when said core needs to access this data item as well as means for transmitting a unique message for access to a digital data item located in the cache memory of at least one other core of the system, said message including the memory addresses that make up the pattern of the data item sought.

2. The system as claimed in claim 1, in which all of the cores of the system include a table of patterns (306).

3. The system as claimed in any one of the preceding claims, in which the table of patterns of a core (306) is controlled by the processor of said core (303) in collaboration with a hardware accelerator, the functions of said accelerator being to store the table of patterns and to establish the mapping between an input memory address AdB and one of the stored patterns.

4. The system as claimed in any one of the preceding claims, in which the series of addresses that make up a pattern is obtained by a pattern function applied to the input memory address AdB.

5. The system as claimed in any one of the preceding claims, in which the patterns used are defined as follows:

$$Desc = f(AdB, L, D)$$

in which :

$f(\ )$ represents the function of the pattern, said function returning the L addresses starting from the address AdB, said L addresses being spaced apart by D addresses;
$Desc$ represents the pattern descriptor, that is to say the series of addresses resulting from the application of the function $f(\ )$ with the set of parameters $AdB, L$ and $D$;
$AdB$ represents the base address, said address corresponding to the first address of the series of addresses that make up the pattern of the data item sought;
$L$ is an integer number corresponding to the number of binary words included in the data item sought;
D corresponds to the offset that makes it possible to go from the address of a binary word to the address of the next binary word included in the pattern.

6. The system as claimed in any one of the preceding claims, in which the table of patterns is loaded when the system is started up.

7. The system as claimed in any one of the preceding claims, in which the table of patterns is a hash table.

8. The system as claimed in any one of the preceding claims, in which, when a core comprising a table of patterns requires memory access to a data item associated with a memory address AdB and a pattern is found, this core sends a message to another core, called pattern manager core CGM in charge of managing this pattern, the function of said CGM core being to find the data item associated with the pattern in its cache memory and to send it to the requesting core.

9. The system as claimed in claim 8, **characterized in that** each core of the system is identified by an index, the index of a CGM core being determined by using the expression:

$$CGM = (AdB/ TP) \% N$$

in which:

CGMi represents the index of the pattern manager core;
TP represents the size of the memory pages of the system;
AdB represents the base address of the data item sought;
N represents the total number of cores of the system.

10. The system as claimed in any one of the preceding claims, **characterized in that** a consistency table (305) is stored in at least one of the cores of the system, said table comprising an indication of the presence or of the absence of digital data items in the cache memory of other cores of the system.

11. The system as claimed in claim 10, **characterized in that** a core is called conventional manager core CGC when it comprises a data item sought by another core, called requesting core, and comprising a consistency table, said data item having been located in the CGC core by virtue of said table, a CGC core being identified by the requesting core by using the following expression:

$$CGCi = (AdB /TL) \% N$$

in which:

CGCi represents the index of the conventional manager core;
TL represents the size of a cache memory line.

12. The system as claimed in any one of the preceding claims, **characterized in that** the cores are interconnected by a network with "mesh" type topology.

13. A data search method for memory access via a core included in a multi-core system as claimed in any one of the preceding claims, the following steps being applied when access to a data item stored in the system is requested by said core:

- a step of searching for the data item sought in the cache memory of said core;
- if the search is unsuccessful, a step of checking for the presence of the data item sought in the cache memory of another core by using a table of patterns;
- if a pattern associated with the data item sought is found, a step of sending a unique access message comprising the addresses of the pattern to the core responsible for said pattern.

14. The method as claimed in claim 13, **characterized in that** it comprises a step of checking for the presence of the data item sought in the cache memory of another core by using a consistency table (305).

FIG.1

EP 2 666 092 B1

FIG.2A

FIG.2B

FIG.2C

FIG.2D

EP 2 666 092 B1

300

303                    304

Processeur          L2

305                    306

DIR          Table de
             motifs

302

Mémoire Principale

301

FIG.3

400          401                    402

AV

| AdB1,L1,D1 |
| AdB2,L2,D2 |
| AdB3,L3,D3 |
| AdB4,L4,D4 |

FIG.4

600                    604          605

D                      D            D

606

@a
@b
@c

601                    @a
                       @b
                       @c

CGM

603          FIG.6

FIG.5

EP 2 666 092 B1

**EP 2 666 092 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7325102 B1
- US 7363435 B1

**Littérature non-brevet citée dans la description**

- **B. KISACANIN.** *Intégral Image Optimizations for Embedded Vision Applications, SSIAI 2008, IEEE Southwest Symposium on Image Analysis and Interprétation,* 24 Mars 2008, 181-184